(19) Europäisches Patentamt
European Patent Office
Office européen des brevets

(11) **EP 2 014 954 A2**

(12) **DEMANDE DE BREVET EUROPEEN**

(43) Date de publication:
**14.01.2009 Bulletin 2009/03**

(51) Int Cl.:
***F16H 48/08*** *(2006.01)*

(21) Numéro de dépôt: **08160268.2**

(22) Date de dépôt: **11.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **11.07.2007 FR 0705020**

(71) Demandeur: **Ateliers Mecaniques et Industries Speciales**
**03100 Montlucon (FR)**

(72) Inventeur: **Pobeaud, Didier**
**03100 Montlucon (FR)**

(74) Mandataire: **Myon, Gérard Jean-Pierre et al**
**Cabinet Lavoix Lyon**
**62, rue de Bonnel**
**69448 Lyon Cedex 03 (FR)**

(54) **Différentiel de transmission et utilisation d'un tel différentiel**

(57) Ce différentiel (1) de transmission comprend un boîtier (3) de différentiel, dans lequel sont logés deux pignons planétaires (5) et au moins deux pignons satellites (7). Selon l'invention, chacun des pignons (5, 7) est un pignon spiroconique.

Un tel différentiel (1) peut notamment être utilisé pour l'entraînement des roues motrices d'un véhicule automobile.

*Fig.2*

EP 2 014 954 A2

**Description**

La présente invention a trait à un différentiel de transmission, du type comprenant un boîtier de différentiel dans lequel sont logés deux pignons planétaires et au moins deux pignons satellites. L'invention a également trait à une utilisation et à un procédé de fabrication d'un tel différentiel.

Dans le domaine automobile, il est connu d'utiliser un différentiel de transmission pour l'entraînement des roues motrices d'un véhicule, ce différentiel comprenant un boîtier de différentiel dans lequel sont montés deux pignons planétaires et au moins deux pignons satellites, en prise chacun avec les deux pignons planétaires. De manière classique, les pignons internes d'un différentiel de transmission sont des pignons coniques à denture droite, taillée ou forgée. Une augmentation du couple applicable en sortie d'un tel différentiel impose une augmentation de l'encombrement du différentiel, ce qui n'est pas compatible avec les spécifications des constructeurs automobiles qui recherchent des différentiels de transmission compacts et performants. De plus, les différentiels à pignons coniques droits présentent une tenue mécanique limitée, la rupture du différentiel étant notamment susceptible d'intervenir en cas de manoeuvre incidentelle, dans laquelle une des roues motrices du véhicule est bloquée, alors que tout l'effort du moteur est appliqué sur l'embrayage.

C'est à ces inconvénients qu'entend plus particulièrement remédier l'invention en proposant un différentiel de transmission présentant une tenue mécanique améliorée et permettant d'obtenir un couple de sortie important avec un encombrement limité.

A cet effet, l'invention a pour objet un différentiel de transmission, du type comprenant un boîtier de différentiel dans lequel sont logés deux pignons planétaires et au moins deux pignons satellites, caractérisé en ce que chacun des pignons précités est un pignon spiroconique.

Au sens de l'invention, on entend par « pignon spiroconique » un pignon à denture conique et hélicoïdale, c'est-à-dire un pignon dont la denture décrit une hélice, tout en étant inscrite dans un cône.

Selon d'autres caractéristiques avantageuses de l'invention, prises isolément ou selon toutes les combinaisons techniquement possibles :

- chacun des pignons est une pièce forgée ;
- le rapport de conduite de chaque couple de pignons est supérieur à 1,4, de préférence supérieur à 1,6 ;
- chacun des pignons est un pignon à denture spiroconique à pas constant ;
- chacun des pignons est un pignon à denture spiroconique à pas constant obtenu selon un mode de génération compatible avec un procédé de fabrication de pignon par forgeage, dans lequel chaque génératrice Rx subit une rotation suivant l'axe du pignon d'une valeur θ telle que :

$$\theta(Rx) = (Rd - Rx) * \cos\delta_p * \frac{2\pi}{p} \ ,$$

avec $\delta_p$ : demi angle de cône primitif du pignon ;
p : pas de l'hélice du pignon ;
Rd : génératrice de départ correspondant à une rotation nulle ;

- chacun desdits pignons est une pièce forgée dans une machine de forgeage dont l'outillage est apte à avoir plusieurs mouvements combinés ;
- le différentiel comprend une coupelle anti-friction intercalée entre la surface externe de chacun des pignons et la surface interne du boîtier;
- chacun des pignons comporte une surface externe globalement convexe, propre à coopérer avec une surface interne globalement concave du boîtier ;
- chacun des pignons comporte une surface externe sensiblement plane, propre à coopérer avec une surface interne sensiblement plane du boîtier ;
- le boîtier est une pièce issue de fonderie ou une pièce forgée.

Comme il ressort des caractéristiques précédentes, le contact entre la surface externe de chacun des pignons et la surface interne du boîtier peut être établi par une forme plane des surfaces du pignon et du boîtier ou bien par une forme convexe de la surface du pignon et une forme concave de la surface du boîtier de différentiel. En outre, chaque pignon est avantageusement un pignon à denture spiroconique à pas constant, présentant un profil dont la définition est compatible avec un procédé de fabrication de pignons par forgeage. Il est ainsi possible de limiter le coût de fabrication des pignons du différentiel.

L'invention a également pour objet l'utilisation d'un différentiel tel que décrit ci-dessus pour l'entraînement des roues motrices d'un véhicule automobile.

Enfin, l'invention a pour objet un procédé de fabrication d'un différentiel tel que décrit ci-dessus comprenant des étapes dans lesquelles :

- on fabrique chacun des deux pignons planétaires par forgeage dans une machine de forgeage dont l'outillage est apte à avoir plusieurs mouvements combinés, par remplissage de la denture puis éjection du pignon au moyen de l'outillage précité ;
- on fabrique chacun des au moins deux pignons satellites par forgeage dans une machine de forgeage dont l'outillage est apte à avoir plusieurs mouvements combinés, par remplissage de la denture puis éjection du pignon au moyen de l'outillage précité ;
- on assemble le différentiel en positionnant les pignons planétaires et satellites à l'intérieur du boîtier.

Les caractéristiques et avantages de l'invention apparaîtront dans la description qui va suivre de deux modes de réalisation d'un différentiel de transmission selon l'invention, donnée uniquement à titre d'exemple et faite en se référant aux dessins annexés dans lesquels :

- la figure 1 est une coupe axiale d'un différentiel de transmission conforme à un premier mode de réalisation de l'invention ;
- la figure 2 est une vue en perspective du boîtier et des pignons du différentiel de la figure 1, une partie du boîtier ayant été arrachée ;
- la figure 3 est une vue de face d'un pignon planétaire du différentiel de la figure 1 ;
- la figure 4 est une coupe selon la ligne IV-IV de la figure 3 ;
- la figure 5 est une vue de face d'un pignon satellite du différentiel de la figure 1 ;
- la figure 6 est une coupe selon la ligne VI-VI de la figure 5 ;
- la figure 7 est un tableau comparatif des caractéristiques de couples de pignons droits et spiroconiques de différentiels ;
- la figure 8 est une vue à plus grande échelle d'une dent du pignon planétaire de la figure 3, la ligne de contact entre cette dent et un pignon satellite étant hachurée ;
- la figure 9 est une vue analogue à la figure 8 pour une dent d'un pignon planétaire conique à denture droite d'un différentiel de l'état de la technique, la ligne de contact entre cette dent et un pignon satellite conique à denture droite correspondant étant hachurée ; et
- la figure 10 est une coupe analogue à la figure 1 pour un différentiel de transmission conforme à un deuxième mode de réalisation de l'invention.

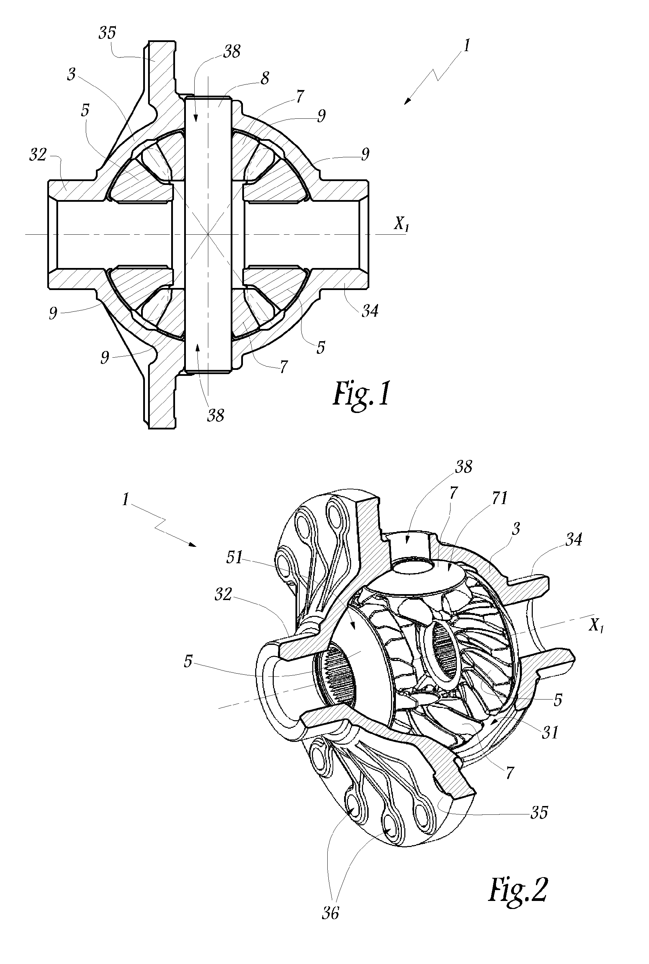

Le différentiel de transmission 1 représenté sur les figures 1 et 2 comprend un boîtier 3 de différentiel, qui délimite un logement intérieur 4 dans lequel sont montés deux pignons planétaires spiroconiques 5 et deux pignons satellites spiroconiques 7. Le différentiel 1 peut équiper un véhicule automobile et être utilisé pour l'entraînement des roues motrices de ce véhicule.

Comme montré sur les figures 1 et 2, le boîtier 3 comporte deux portions tubulaires 32 et 34, centrées sur un même axe $X_1$ du différentiel 1 et prévues chacune pour le passage d'un arbre de sortie non représenté, relié à l'un des pignons planétaires 5 du différentiel 1. Le différentiel 1 comprend également un axe de montage 8, dirigé perpendiculairement par rapport à l'axe $X_1$ du différentiel 1 et autour duquel les pignons satellites 7 sont montés fous. L'axe de montage 8 est formé par un barreau cylindrique à section circulaire, qui passe dans des orifices 38 correspondants du boîtier 3, ce barreau étant omis à la figure 2.

Dans ce mode de réalisation, le boîtier 3 comporte une surface interne 31 concave et sensiblement sphérique, propre à coopérer avec une surface externe 51 convexe de chacun des pignons planétaires 5 et avec une surface externe 71 convexe de chacun des pignons satellites 7. Le différentiel 1 comprend quatre coupelles anti-friction 9 intercalées entre la surface externe de chacun des pignons 5 et 7 et la surface interne 31 du boîtier 3. Chaque coupelle 9 est une tôle de faible épaisseur, conformée en une calotte sensiblement sphérique et percée d'un orifice central destiné respectivement au passage de l'arbre de sortie correspondant du différentiel 1, pour chaque coupelle 9 associée à un pignon planétaire 5, et au passage de l'axe de montage 8, pour chaque coupelle 9 associée à un pignon satellite 7.

Le boîtier 3 comporte également, au voisinage de la portion tubulaire 32, une collerette radiale externe 35 destinée à l'accrochage d'une couronne dentée non représentée d'entraînement du différentiel 1. La collerette 35 est percée d'orifices 36, prévus pour le passage de vis de fixation de la couronne d'entraînement, également non représentées.

Dans ce mode de réalisation, le boîtier 3 est une pièce issue de fonderie, constituée en fonte. En variante, le boîtier 3 peut être constitué en tout autre matériau approprié. Le boîtier 3 peut également être fabriqué par d'autres techniques que la fonderie, par exemple par forgeage. Lorsqu'il est fabriqué par forgeage, le boîtier 3 est réalisé en deux parties.

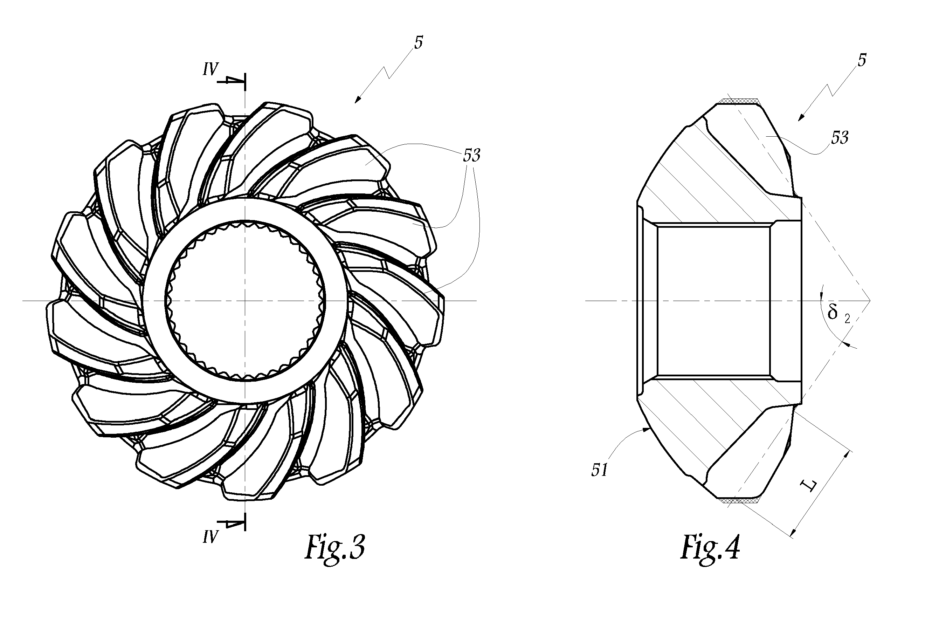

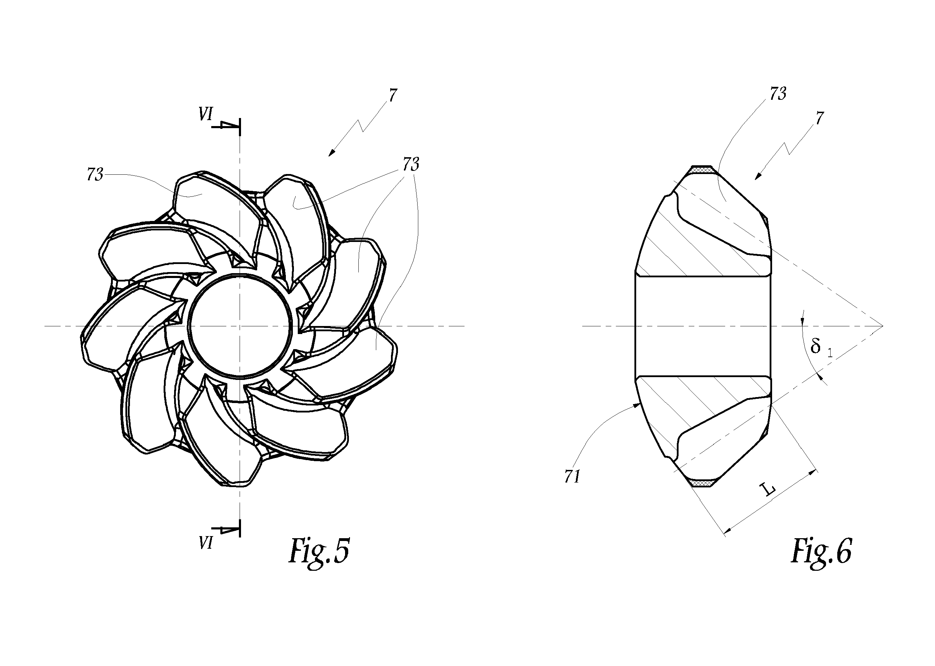

Comme visible plus particulièrement sur les figures 3 à 6, chaque pignon planétaire 5 ou satellite 7 comporte une denture spiroconique interne 53 ou 73, ménagée à l'opposé de la face externe 51 ou 71 convexe. Dans ce mode de réalisation, les pignons planétaires 5 et satellites 7 sont des pièces forgées, constituées en une nuance d'acier adaptée à leur fonction et soumises à des traitements thermiques appropriés. Plus précisément, chacun des pignons planétaires 5 et satellites 7 est un pignon à denture spiroconique à pas constant obtenu selon un mode de génération compatible avec un procédé de fabrication de pignons par forgeage, dans lequel chaque génératrice Rx subit une rotation suivant l'axe du pignon d'une valeur θ telle que :

$$\theta(Rx) = (Rd - Rx) * \cos\delta_p * \frac{2\pi}{p} \ ,$$

avec $\delta_p$ : demi angle de cône primitif du pignon planétaire 5 ou satellite 7 ;
p : pas de l'hélice du pignon planétaire 5 ou satellite 7 ;
Rd : génératrice de départ, correspondant à une rotation nulle.

En particulier, la valeur du pas p de l'hélice de chaque pignon 5 ou 7, qui est la valeur du déplacement de la génératrice de l'hélice le long de son axe en un tour, est différente entre le cône de pied, le cône de tête et le cône primitif du pignon.

Le forgeage de chaque pignon 5 ou 7 est réalisé dans une machine de forgeage dont l'outillage est apte à avoir plusieurs mouvements combinés, à savoir au moins un mouvement de rotation, un mouvement de translation et un mouvement de contre-pression. Plus précisément, c'est grâce à la définition spécifique du profil de chaque pignon 5 ou 7 selon la relation précédente θ (Rx) qu'il est possible de fabriquer chaque pignon 5 ou 7 dans une machine de forgeage mettant en jeu des mouvements combinés. La fabrication de chaque pignon 5 ou 7 par forgeage dans une telle machine de forgeage a un double avantage. En premier lieu, la fabrication d'un pignon ayant un profil défini par la relation θ(Rx) précitée est difficile à réaliser par des procédés conventionnels de fabrication de pignons, notamment par taillage, de sorte que le forgeage ressort comme un moyen avantageux et relativement simple d'obtention de tels pignons. En outre, la fabrication par forgeage des pignons 5 et 7 du différentiel 1 permet de limiter le coût de production de ces pignons et le coût global du différentiel 1.

Un procédé de fabrication du différentiel 1 conforme à l'invention comprend des étapes telles que décrites ci-après.

Tout d'abord, on fabrique chacun des deux pignons planétaires 5 par forgeage dans une machine de forgeage dont l'outillage est apte à avoir plusieurs mouvements combinés, à savoir au moins un mouvement de rotation, un mouvement de translation et un mouvement de contre-pression. Le forgeage est réalisé en deux phases successives, à savoir le remplissage de la denture, puis l'éjection du pignon forgé au moyen de l'outillage précité de la machine.

On procède ensuite à la fabrication de chacun des deux pignons satellites 7, également par forgeage dans une machine de forgeage dont l'outillage est apte à avoir plusieurs mouvements combinés, à savoir au moins un mouvement de rotation, un mouvement de translation et un mouvement de contre-pression. De manière similaire au forgeage des pignons planétaires 5, le forgeage de chaque pignon satellite 7 comprend le remplissage de la denture, puis l'éjection du pignon forgé au moyen de l'outillage précité de la machine.

Enfin, on assemble les différents éléments du différentiel 1. En particulier, on positionne les deux pignons planétaires 5 et les deux pignons satellites 7, montés sur leur axe 8, à l'intérieur du boîtier 3 de différentiel.

Un paramètre important des dentures spiroconiques à pas constant est l'angle d'hélice de la denture. L'angle d'hélice dépend du diamètre sur lequel on définit l'hélice, alors que le pas d'hélice p ne varie pas pour tout point de la denture, quel que soit le diamètre sur lequel il se trouve. Les angles d'hélice respectifs des pignons planétaires 5 et des pignons satellites 7 contribuent à la pression axiale dans l'engrènement des pignons 5 et 7. Les angles d'hélice des pignons 5 et 7 du différentiel 1 selon l'invention sont adaptés de manière à obtenir un comportement et une tenue mécanique optimaux des pignons 5 et 7.

L'angle d'hélice α(d) d'une denture cylindrique hélicoïdale est défini par l'expression :

$$\alpha(d) = \arctan\left(\frac{2\pi}{p} * \frac{d}{2}\right),$$

avec d : diamètre sur lequel est définie l'hélice ;

p : pas de l'hélice.

Dans le cas d'une denture spiroconique à pas constant, l'hélice est définie sur un cône, notamment le cône primitif, et non sur un cylindre, de sorte que le diamètre d varie suivant la génératrice Rx où l'on se trouve. L'angle d'hélice α(*Rx* ) d'une denture spiroconique à pas constant est alors défini par l'expression :

$$\alpha(Rx) = \arctan\left(\frac{2\pi}{p} * Rx * \sin\delta\right),$$

avec δ : angle du cône sur lequel est appliquée l'hélice ;

p : pas de l'hélice.

Le rapport de conduite $\varepsilon_{droit}$ d'un couple de pignons coniques à denture droite, qui est un indicateur de la venue en prise des pignons, est défini par l'expression :

$$\varepsilon_{droit} = \frac{\sqrt{d_{a2}{}^2 - d_{b2}{}^2} + \sqrt{d_{a1}{}^2 - d_{b1}{}^2} - 2a * \sin\alpha}{2\pi * m * \cos\alpha}$$

où

$$\delta_1 = \operatorname{arctg}(\frac{Z_1}{Z_2})$$

$$\delta_2 = \operatorname{arctg}(\frac{Z_2}{Z_1})$$

$$d_{p1} = 2R * \tan\delta_1$$

$$d_{p2} = 2R * \tan\delta_2$$

$$d_{a1} = d_{p1} + 2h_{a1}$$

$$d_{a2} = d_{p2} + 2h_{a2}$$

$$d_{b1} = d_{p1} * \cos\alpha$$

$$d_{b2} = d_{p2} * \cos \alpha$$

$$m = \frac{d_{p1}}{Z_1} = \frac{d_{p2}}{Z_2}$$

$$a = \frac{d_{p1} + d_{p2}}{2}$$

avec $Z_1$ : nombre de dents de pignon satellite ;

$Z_2$ : nombre de dents de pignon planétaire ;

$\delta_1$ : demi angle de cône primitif de pignon satellite ;

$\delta_2$ : demi angle de cône primitif de pignon planétaire ;

$d_{p1}$ : diamètre primitif de pignon satellite ;

$d_{p2}$ : diamètre primitif de pignon planétaire ;

R : génératrice ;

$a$ : entraxe ;

$\alpha$ : angle de pression ;

m : module équivalent ;

$h_{a1}$, $h_{a2}$ : saillies équivalentes.

Le rapport de conduite $\varepsilon_{spiro}$ d'un couple de pignons spiroconiques est alors relié au rapport de conduite $\varepsilon_{droit}$ d'un couple de pignons coniques à denture droite de mêmes caractéristiques par l'expression :

$$\varepsilon_{spiro} = \varepsilon_{droit} * k_\gamma$$

où $k_\gamma$ est un facteur d'hélice des pignons spiroconiques :

$$k_\gamma = 1 + \frac{L * \cos \delta_1}{p} * Z_1 = 1 + \frac{L * \cos \delta_2}{p} * Z_2$$

avec L : longueur utile de chaque dent au cône primitif ;

p : pas de l'hélice de chaque pignon.

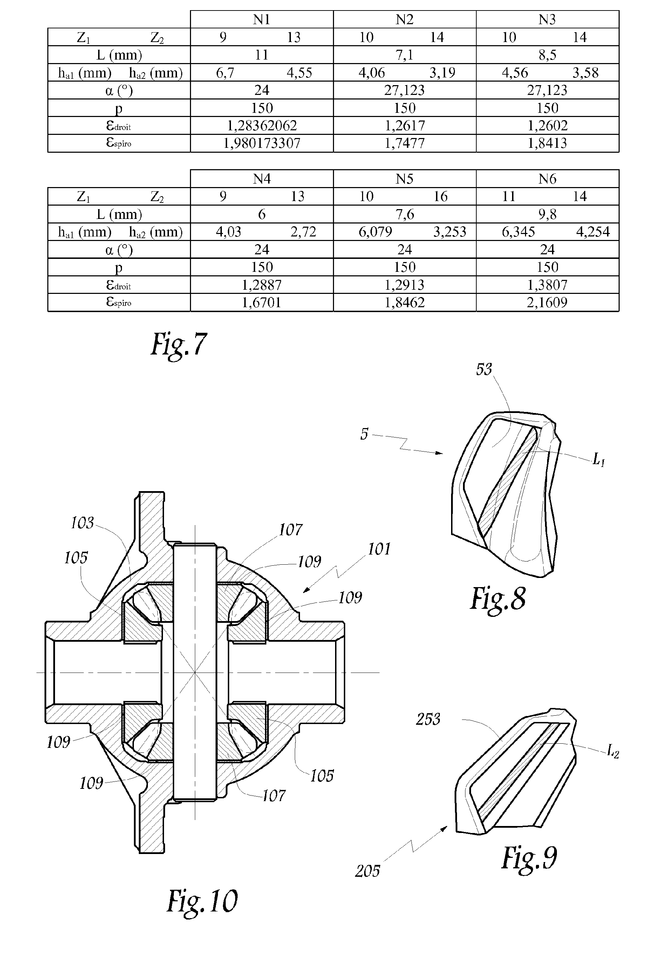

Le rapport de conduite $\varepsilon_{spiro}$ d'un couple de pignons spiroconiques est supérieur au rapport de conduite $\varepsilon_{droit}$ d'un couple de pignons coniques droits de mêmes caractéristiques. Le tableau de la figure 7 montre l'évolution du rapport de conduite respectivement pour des pignons coniques droits de différentiels et des pignons spiroconiques de mêmes caractéristiques, déclinés, à titre d'exemple, sur six définitions de différentiels existants N1 à N6. Comme il ressort de ce tableau, le rapport de conduite $\varepsilon_{spiro}$ de chaque couple de pignons spiroconiques utilisables dans un différentiel de transmission selon l'invention est compris entre, respectivement, environ 1,6 et 2,2, ce qui est bien supérieur au rapport de conduite $\varepsilon_{droit}$ de chaque couple de pignons coniques à denture droite correspondants utilisés dans les différentiels de l'état de la technique, qui sont compris entre, respectivement, environ 1,2 et 1,4. Le rapport de conduite $\varepsilon_{spiro}$ de chaque couple de pignons spiroconiques 5 et 7 du différentiel 1 conforme à l'invention est ainsi augmenté d'une valeur d'environ 0,7 à 0,8 par rapport au rapport de conduite $\varepsilon_{droit}$ de chaque couple de pignons coniques à denture droite correspondants utilisés dans un différentiel de l'état de la technique.

Le rapport de conduite amélioré des pignons spiroconiques par rapport aux pignons coniques droits est également illustré aux figures 8 et 9, qui montrent la ligne de contact entre une dent d'un pignon planétaire et une dent d'un pignon satellite correspondant, respectivement pour le différentiel 1 conforme à l'invention et pour un différentiel de l'état de la technique à pignons coniques droits. Comme visible sur la figure 8, la ligne de contact $L_1$ entre une dent 53 d'un pignon planétaire spiroconique 5 du différentiel 1 et une dent 73 d'un pignon satellite spiroconique 7 est fortement inclinée le long de la dent 53. Par comparaison, la ligne de contact $L_2$ entre une dent 253 d'un pignon planétaire conique à denture droite 205 et un pignon satellite conique à denture droite correspondant est sensiblement rectiligne le long de la dent 253, comme montré sur la figure 9. Le profil incliné de la ligne de contact $L_1$ implique une meilleure qualité d'engrènement des dentures spiroconiques 53 et 73 des pignons 5 et 7 du différentiel 1 par rapport à des dentures droites. Il en résulte une meilleure répartition des charges sur les dentures des pignons 5 et 7 et une meilleure efficacité du différentiel 1 par rapport aux différentiels connus.

De manière particulièrement avantageuse, le rapport de conduite $\varepsilon_{spiro}$ amélioré des pignons spiroconiques 5 et 7 du différentiel 1 permet d'obtenir un couple de sortie du différentiel 1 supérieur d'environ 20% aux couples pouvant être obtenus en sortie des différentiels de l'état de la technique à pignons coniques droits. Dès lors, le différentiel 1 conforme à l'invention présente, pour un même encombrement du boîtier 3 de différentiel, des performances accrues par rapport aux différentiels de l'état de la technique.

En outre, le profil spiroconique des pignons 5 et 7 du différentiel 1 conforme à l'invention permet la mise en prise simultanée de plusieurs dents 73 d'un pignon satellite 7 avec les dents 53 d'un pignon planétaire 5, ce qui permet d'augmenter la tenue mécanique du différentiel 1. En fonctionnement, les contraintes sur la denture 53 ou 73 d'un pignon spiroconique 5 ou 7 du différentiel 1 ne sont pas réparties régulièrement le long de la génératrice du pignon. En particulier, et contrairement au cas des pignons coniques à denture droite des différentiels connus, les pics de couples ne sollicitent pas systématiquement les mêmes régions des dentures 53 et 73. Les contraintes appliquées à la denture 53 ou 73 de chaque pignon 5 ou 7 étant mieux réparties, ces pignons présentent une tenue mécanique accrue. De plus, les effets de fatigue sur les dentures 53 et 73 sont limités, ce qui permet de garantir un fonctionnement fiable et une bonne durée de vie du différentiel 1 conforme à l'invention.

Dans le deuxième mode de réalisation représenté à la figure 10, les éléments analogues à ceux du premier mode de réalisation portent des références identiques augmentées de 100. Le différentiel de transmission 101 de ce deuxième mode de réalisation comprend un boîtier 103 de différentiel, dans lequel sont logés deux pignons planétaires spiroconiques 105 et deux pignons satellites spiroconiques 107. De manière analogue au premier mode de réalisation, chacun des pignons planétaires 105 et satellites 107 du différentiel 101 est un pignon à denture spiroconique à pas constant obtenu selon un mode de génération compatible avec un procédé de fabrication de pignon par forgeage, dans lequel chaque génératrice Rx subit une rotation suivant l'axe du pignon d'une valeur θ telle que :

$$\theta(Rx) = (Rd - Rx) * \cos\delta_p * \frac{2\pi}{p} \ ,$$

avec $\delta_p$ : demi angle de cône primitif du pignon planétaire 105 ou satellite 107 ;
p : pas de l'hélice du pignon planétaire 105 ou satellite 107 ;
Rd : génératrice de départ, correspondant à une rotation nulle.

Toutefois, à la différence des pignons 5 et 7 du premier mode de réalisation, les pignons 105 et 107 sont des pignons à fond plat, présentant respectivement une surface externe 151 et une surface externe 171 sensiblement planes, propres à coopérer avec des portions sensiblement planes correspondantes d'une surface interne 131 du boîtier 103. Le différentiel 101 comprend également quatre coupelles anti-friction 109 intercalées entre la surface externe de chacun des pignons 105 et 107 et la surface interne 131 du boîtier 103. De manière analogue au différentiel 1 du premier mode de réalisation, le différentiel 101 présente une tenue mécanique accrue par rapport aux différentiels de l'état de la technique et permet l'obtention d'un couple de sortie important avec un encombrement restreint du différentiel. En outre, la définition spécifique du profil de chaque pignon 105 ou 107 selon la relation θ($Rx$) permet de fabriquer les pignons 105 et 107 du différentiel 101 par forgeage, dans une machine de forgeage dont l'outillage est apte à avoir plusieurs mouvements combinés, selon un procédé de fabrication analogue à celui décrit dans le premier mode de réalisation. La fabrication par forgeage des pignons 105 et 107 du différentiel 101 permet alors, comme dans le premier mode de réalisation, de limiter le coût de production de ces pignons et le coût global du différentiel 101.

L'invention n'est pas limitée aux exemples décrits et représentés. En particulier, le nombre de pignons satellites 7 ou 107 n'est pas limité à deux. A titre d'exemple, un différentiel conforme à l'invention peut comprendre quatre pignons satellites spiroconiques en prise avec deux pignons planétaires spiroconiques, l'ensemble des pignons étant logé dans un boîtier de différentiel. De plus, même s'il s'agit d'une application tout à fait avantageuse, un différentiel à pignons spiroconiques conforme à l'invention peut être utilisé pour d'autres applications que l'entraînement des roues motrices d'un véhicule automobile, par exemple sur des renvois d'angle de prise de force.

**Revendications**

1.  Différentiel (1 ; 101) de transmission, du type comprenant un boîtier (3 ; 103) de différentiel, dans lequel sont logés deux pignons planétaires (5 ; 105) et au moins deux pignons satellites (7 ; 107), **caractérisé en ce que** chacun desdits pignons (5, 7 ; 105, 107) est un pignon spiroconique.

2.  Différentiel selon la revendication 1, **caractérisé en ce que** chacun desdits pignons (5, 7 ; 105, 107) est une pièce forgée.

3.  Différentiel selon l'une quelconque des revendications 1 ou 2, **caractérisé en ce que** le rapport de conduite ($\varepsilon_{\text{spiro}}$) de chaque couple de pignons (5, 7 ; 105, 107) est supérieur à 1,4, de préférence supérieur à 1,6.

4.  Différentiel selon l'une quelconque des revendications précédentes, **caractérisé en ce que** chacun desdits pignons (5, 7 ; 105, 107) est un pignon à denture spiroconique à pas constant.

5.  Différentiel selon l'une quelconque des revendications précédentes, **caractérisé en ce que** chacun desdits pignons (5, 7 ; 105, 107) est un pignon à denture spiroconique à pas constant obtenu selon un mode de génération compatible avec un procédé de fabrication de pignon par forgeage, dans lequel chaque génératrice Rx subit une rotation suivant l'axe du pignon d'une valeur θ telle que :

$$\theta(Rx) = (Rd - Rx) * \cos\delta_p * \frac{2\pi}{p} \quad ,$$

avec $\delta_p$ : demi angle de cône primitif du pignon (5, 7 ; 105, 107) ;
p : pas de l'hélice du pignon (5, 7 ; 105, 107) ;
Rd : génératrice de départ correspondant à une rotation nulle.

6.  Différentiel selon l'une quelconque des revendications 4 ou 5, **caractérisé en ce que** chacun desdits pignons (5, 7 ; 105, 107) est une pièce forgée dans une machine de forgeage dont l'outillage est apte à avoir plusieurs mouvements combinés.

7.  Différentiel selon l'une quelconque des revendications précédentes, **caractérisé en ce qu'**il comprend une coupelle anti-friction (9 ; 109) intercalée entre la surface externe (51, 71 ; 151, 171) de chacun desdits pignons (5, 7 ; 105, 107) et la surface interne (31 ; 131) du boîtier (3 ; 103).

8.  Différentiel selon l'une quelconque des revendications précédentes, **caractérisé en ce que** chacun desdits pignons (5, 7) comporte une surface externe (51, 71) globalement convexe, propre à coopérer avec une surface interne (31) globalement concave du boîtier (3).

9.  Différentiel selon l'une quelconque des revendications 1 à 7, **caractérisé en ce que** chacun desdits pignons (105, 107) comporte une surface externe (151, 171) sensiblement plane, propre à coopérer avec une surface interne (131) sensiblement plane du boîtier (103).

10. Différentiel selon l'une quelconque des revendications précédentes, **caractérisé en ce que** le boîtier (3 ; 103) est une pièce issue de fonderie ou une pièce forgée.

11. Utilisation d'un différentiel (1 ; 101) selon l'une quelconque des revendications précédentes pour l'entraînement des roues motrices d'un véhicule automobile.

12. Procédé de fabrication d'un différentiel (1 ; 101) selon l'une quelconque des revendications 1 à 10, **caractérisé en ce qu'**il comprend des étapes dans lesquelles :

    - on fabrique chacun des deux pignons planétaires (5 ; 105) par forgeage dans une machine de forgeage dont l'outillage est apte à avoir plusieurs mouvements combinés, par remplissage de la denture puis éjection du pignon au moyen de l'outillage précité ;
    - on fabrique chacun des au moins deux pignons satellites (7 ; 107) par forgeage dans une machine de forgeage dont l'outillage est apte à avoir plusieurs mouvements combinés, par remplissage de la denture puis éjection du pignon au moyen de l'outillage précité ;

- on assemble le différentiel (1 ; 101) en positionnant les pignons planétaires (5 ; 105) et satellites (7 ; 107) à l'intérieur du boîtier (3 ; 103).

*Fig.1*

*Fig.2*

*Fig.3*

*Fig.4*

EP 2 014 954 A2

73

73

73

VI

VI

7

*Fig.5*

73

7

δ₁

L

71

*Fig.6*

12

| | N1 | | N2 | | N3 | |
|---|---|---|---|---|---|---|
| $Z_1$      $Z_2$ | 9 | 13 | 10 | 14 | 10 | 14 |
| L (mm) | 11 | | 7,1 | | 8,5 | |
| $h_{a1}$ (mm)    $h_{a2}$ (mm) | 6,7 | 4,55 | 4,06 | 3,19 | 4,56 | 3,58 |
| α (°) | 24 | | 27,123 | | 27,123 | |
| p | 150 | | 150 | | 150 | |
| $\varepsilon_{droit}$ | 1,28362062 | | 1,2617 | | 1,2602 | |
| $\varepsilon_{spiro}$ | 1,980173307 | | 1,7477 | | 1,8413 | |

| | N4 | | N5 | | N6 | |
|---|---|---|---|---|---|---|
| $Z_1$      $Z_2$ | 9 | 13 | 10 | 16 | 11 | 14 |
| L (mm) | 6 | | 7,6 | | 9,8 | |
| $h_{a1}$ (mm)    $h_{a2}$ (mm) | 4,03 | 2,72 | 6,079 | 3,253 | 6,345 | 4,254 |
| α (°) | 24 | | 24 | | 24 | |
| p | 150 | | 150 | | 150 | |
| $\varepsilon_{droit}$ | 1,2887 | | 1,2913 | | 1,3807 | |
| $\varepsilon_{spiro}$ | 1,6701 | | 1,8462 | | 2,1609 | |

*Fig.7*

*Fig.8*

*Fig.10*

*Fig.9*